# EUROPEAN PATENT APPLICATION

(11) **EP 0 997 402 A2**
(43) Date of publication of application: **03.05.2000**
(21) Application number: 99308384.9
(22) Date of filing: 25.10.1999
(51) Int. Cl.: B65G 17/00

(54) **Conveyor apparatus**

(30) Priority: 28.10.1998 GB 9823469
(71) Applicant: ADM Automation Limited, Boldon, Tyne & Wear NE35 9LU (GB)
(72) Inventor: Gosling, Roy, Newcastle upon Tyne, NE16 6LH (GB); Etherington, William, Gateshead, Tyne & Wear NE10 8LS (GB); Smith, Christopher, Ashington, Northumberland NE63 8EX (GB)
(74) Representative: Vinsome, Rex Martin

(57) **Abstract**

An apparatus 1 for conveying goods comprises one or more pallets 2, a first conveyor 3 and a second conveyor 4. Each of the conveyors 3, 4 includes a pair of generally parallel endless conveyor belts. A transfer region 8 is arranged between the ends of conveyor belts 5 and comprises curved grooves 10, 11, 12 for engaging pins 14 on pallets 2 to enable the pallets to be transferred between the first and second conveyors 3, 4.

## Description

The present invention relates to a conveyor apparatus, and relates particularly, but not exclusively, to an apparatus for conveying goods between different stages of a manufacturing and/or assembly process.

It is frequently necessary to transport goods between locations within an industrial site in assembling or testing the goods, for example electrically powered drills, as part of the manufacturing process. Such goods are usually transported on pallets carried on conveyors.

Various apparatus are known for transferring pallets between a pair of conveyors which are not arranged in a line, for example parallel to each other or at right angles to each other. In one such apparatus, a smaller conveyor is provided between the pair of conveyors between which the pallet is to be transferred, and a detector detects when a pallet is correctly positioned on the smaller conveyor. When the detector detects correct location of the pallet, the smaller conveyor is activated to transfer the pallet.

Prior art conveyors of this type suffer from the disadvantage that they are of complicated construction and are therefore expensive to produce.

In another prior art apparatus, a pin is provided at the external periphery of a pallet and engages a curved track arranged externally of the conveyor. As a result, the pallet is constrained to follow the curved path, as a result of which a pallet can be rotated through 90 degrees between conveyors.

Although such systems are less expensive to manufacture than the other prior art systems discussed above, they suffer from the drawback that the curved track arranged externally of the conveyor prevents further equipment being located in close proximity to the conveyor. Since many prior art systems of the type discussed above have components such as detectors located close to the conveyor, it is therefore often impossible to incorporate conveyors of these two prior art types into a single apparatus. In view of the often significant cost of such apparatus, this incompatibility between components of the two prior art types is a major disadvantage.

Preferred embodiments of the present invention seek to overcome the above disadvantages of the prior art.

According to the present invention, there is provided an apparatus for conveying goods, the apparatus comprising:
at least one receptacle for receiving goods to be conveyed, the or each said receptacle comprising at least one projection;
a plurality of conveyors for conveying one or more said receptacles in a respective substantially straight line, each said conveyor comprising at least two substantially parallel conveyor belts for supporting lateral outer portions of said receptacles and having a surface arranged at least partially between two said conveyor belts, said surface having at least one groove for releasably engaging one or more said projections; and
transfer means acting between at least one adjacent pair of conveyors for transferring one or more said receptacles between said pair of conveyors, wherein said transfer means comprises at least one groove cooperating with a said groove of each of said pair of conveyors for releasably engaging one or more said projections.

By providing transfer means having at least one groove between a pair of conveyors, this provides the advantage that a track externally of the conveyor is no longer necessary. Apparatus of the prior art type described above can therefore be located in close proximity to the conveyor, as a result of which the apparatus of the present invention can be made compatible with components of other prior art apparatus.

In a preferred embodiment, the or each said projection comprises a respective retractable pin.

The or each said retractable pin may be urged outwardly of the receptacle by biassing means.

At least one said projection may be provided adjacent the periphery of the corresponding receptacle.

This provides the advantage of leaving the central area of the receptacle accessible. For example, in the case of electrical equipment, the central area may then be provided with an aperture to enable access by a source of electrical power for testing the equipment

At least one said receptacle may have a plurality of said projections.

This provides the advantage of further improving control of the direction of travel of the receptacle.

In a preferred embodiment, said transfer means further comprises disengaging means for disengaging one or more said projections from at least one groove thereof.

The disengaging means may comprise at least one upwardly inclined surface arranged in a respective groove for engaging a said projection to disengage said projection from said groove.

The or each said groove is preferably curved and said disengaging means is provided adjacent an end of the or each said corresponding groove.

Alternatively, at least one said groove may comprise a respective first groove portion and a respective second groove portion extending from said first groove portion and angled relative thereto, wherein said disengaging means is selectively actuable and provided adjacent an end of the or each said first groove portion adjacent the corresponding said second groove portion.

This provides the advantage that a disengaging means may be selectively actuable to transfer a projection from a said first groove portion to a second groove portion to change the direction of movement of the projection, or to disengage the projection from the groove.

The transfer means may further comprise retractable guide means for guiding a respective receptacle along one or more said second groove portions.

This provides the advantage of assisting in controlling the direction of movement of one or more said receptacles.

The guide means preferably comprises a respective surface arranged substantially parallel to at least one said second groove portion.

The transfer means may further comprise at least one roller provided adjacent a said groove.

The transfer means preferably comprises a plurality of said grooves, and at least one said roller is provided outwardly of the outermost of said grooves.

Preferred embodiments of the invention will now be described, by way of example only and not in any limitative sense, with reference to the accompanying drawings, in which:-
Figure 1 is a perspective view of part of an apparatus of a first embodiment of the present invention;
Figure 2 is a detailed cross-sectional view of a retractable pin of the pallet of Figure 1;
Figure 3 is a plan view of the transfer surface of the apparatus of Figure 1;
Figure 4 is a plan view, corresponding to Figure 3, of a transfer surface of an apparatus of a second embodiment of the present invention;
Figure 5 is a perspective view of a support roller of the apparatus of Figure 4;
Figure 6 is a plan view of part of an apparatus of a third embodiment of the present invention; and
Figure 7 is a perspective view of the part of the apparatus of Figure 6.

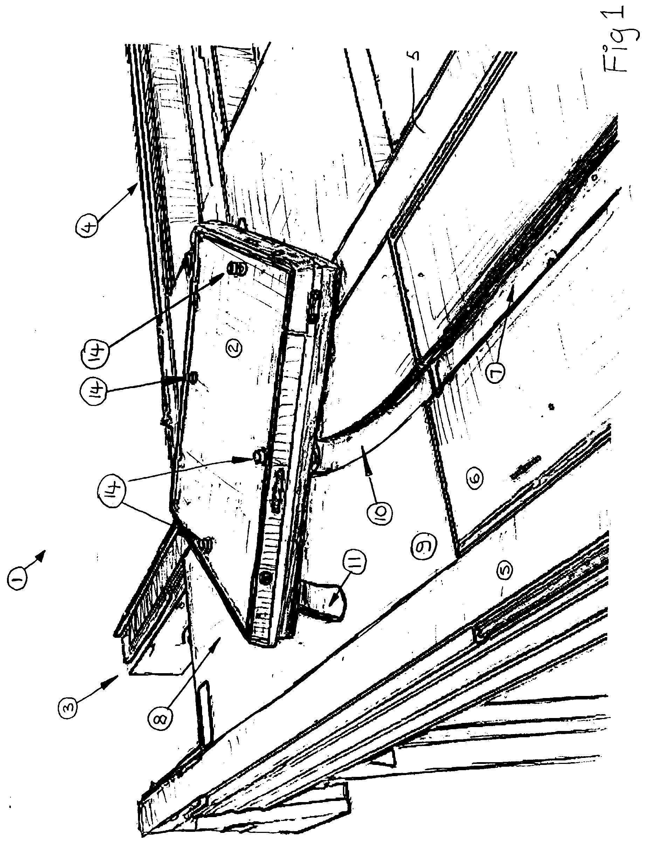

Referring in detail to Figure 1, an apparatus 1 of a first embodiment of the invention, for conveying one or more pallets 2 between locations, comprises a first conveyor 3 and a second conveyor 4. The first conveyor 3 comprises a pair of generally parallel endless conveyor belts 5. The conveyor belts 5 are separated in the region shown in Figure 1 towards their ends by a sheet 6 of low friction material having a longitudinal groove 7. The second conveyor 4 is constructed in a similar manner to the first conveyor 3 and is arranged generally at right angles thereto.

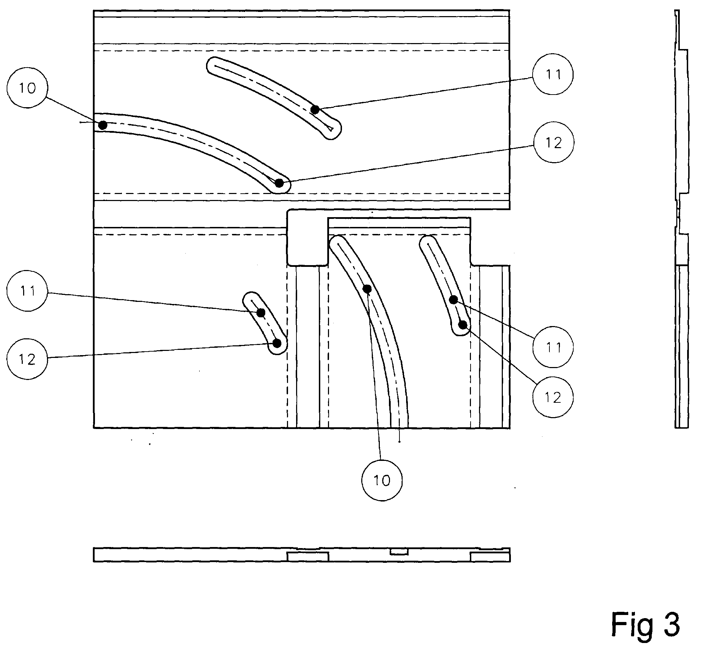

A transfer region 8 is arranged between the ends of conveyor belts 5 and extends from the sheet 6. The transfer region 8 comprises a support surface 9 of low friction material lying generally in the same plane as the upper surface of sheet 6, and having a pair of central grooved tracks 10 (only one of which is shown in Figure 1 and both of which are shown in Figure 3), each of the tracks 10 being in the shape of a generally circular arc. One of the tracks 10 cooperates and extends from the groove 7 on sheet 6, and the other track cooperates and extends from the corresponding groove (not shown) provided between the conveyor belts of second conveyor 4.

Three further tracks 11 are also provided in the transfer region 8, as shown in greater detail in Figure 3, and the end portion of each of tracks 10, 11 is provided with an inclined portion 12, the purpose of which will be explained in greater detail below. The tracks 11 are also in the shape of generally circular arcs. Two of the tracks 11 are arranged radially outwardly of the tracks 10, and one is arranged radially inwardly.

Each of the pallets 2 to be conveyed by the apparatus comprises a generally rectangular body portion having an upper support surface 13. A respective retractable guiding pin 14 is arranged generally at the central part of each edge of the upper support surface 13. Each of the pins 14 is adapted to project downwardly of the pallet 2 to engage one of the grooves or tracks 7, 10, 11.

The pallet 2 shown in Figure 1 is illustrated as having a continuous upper supporting surface 13, but one or more apertures may be provided in the supporting surface 13 to allow access from below to equipment supported on the pallet 2. For example, if the apparatus 1 is used to convey electrical equipment, such as power tools, between locations, the aperture(s) in the upper supporting surface 13 allow a source of electrical power to the equipment to enable the equipment to be tested.

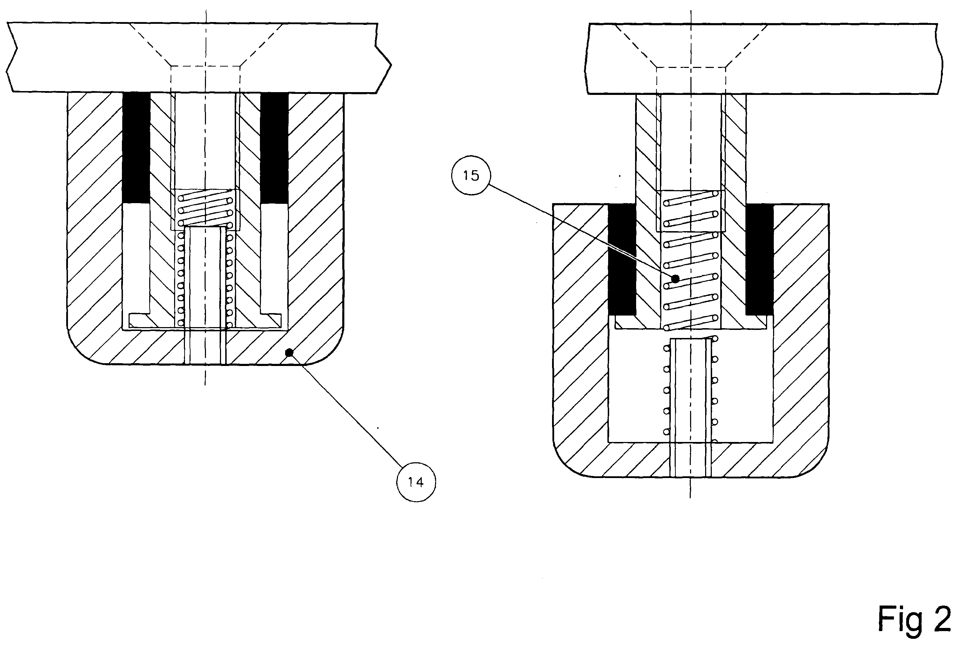

As shown in greater detail in Figure 2, each of the pins 14 is urged downwardly of the pallet 2 by means of a compression spring 15. The compression force of each of the springs 15 is chosen such that the pin 14 can be urged into the body portion of the pallet 2 by the weight of the pallet 2 if the pin 14 is resting on a surface such as the sheet 6 or the surface of the transfer region 8.

The operation of the apparatus 1 shown in Figures 1 to 3 will now be described.

A pallet 2 is initially conveyed along the first conveyor 3 by movement of the conveyor belts 5, which frictionally engage the peripheral edges of the pallet 2. As the pallet 2 approaches the end of the first conveyor 3, the pallet 2 passes over the sheet 6 and the guidance pin 14 in its leading edge engages groove 7. This causes the pin 14 in the leading edge to engage the first track 10, which in turn constrains the centre of the leading edge of pallet 2 to move along the circular arc defined by the first track 10.

Similarly, the pin 14 arranged in the trailing edge of the pallet 2 engages the groove 7 in the sheet 6 and then subsequently engages the first track 10. At the same time, the other two pins 14 engage respective tracks 11 on opposite sides of the tracks 10. As a result of the shape of tracks 11, the pallet 2 is caused to rotate clockwise as shown in Figure 1.

During rotation of the pallet 2, the pin 14 in the leading edge of the pallet 2 engages the inclined portion 12 at the forward end of the first track 10 to cause the pin 14 to be retracted inside the body portion of the pallet 2 without the pin 14 becoming caught on the end of the track 10. Similarly, the pin 14 located in the first radially outermost track 11 shown in Figure 3 engages the inclined portion 12 at the end of that track 11 to disengage the pin 14 from the track 11.

The disengaged pins 14 then engage the second track 10 or the second radially outermost track 11. This causes further rotation of the pallet 2 and the pins 14 arranged in the centre of the leading and trailing edges of the pallet 2 eventually engage the groove provided in the sheet arranged between the conveyor belts of second conveyor 4. As a consequence of the rotation of the pallet 2 and the movement of the pins in the tracks 10, the pallet 2 is then correctly oriented relative to the second conveyor 4 and can then be transported by the conveyor belts of the second conveyor 4.

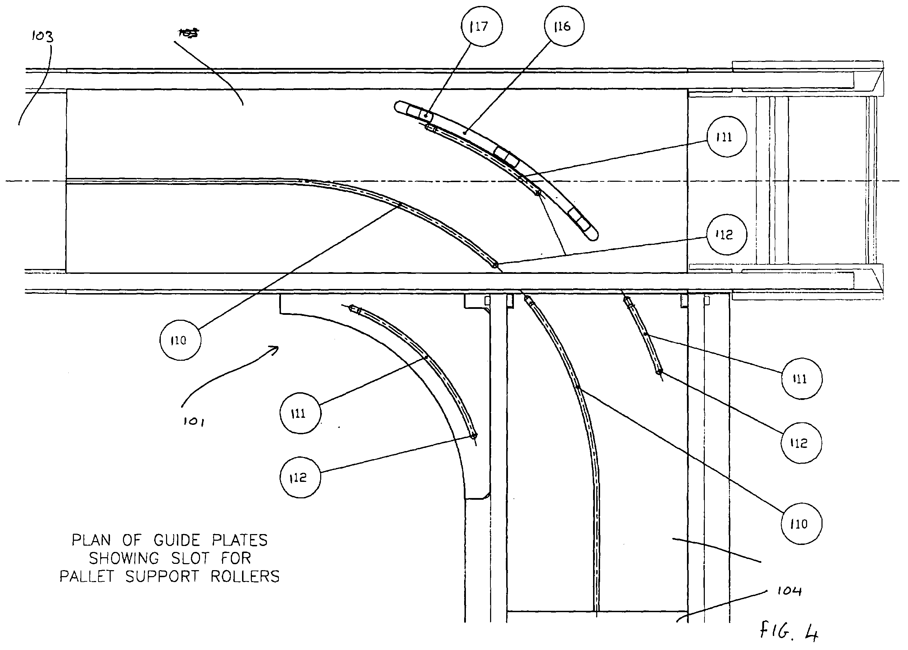

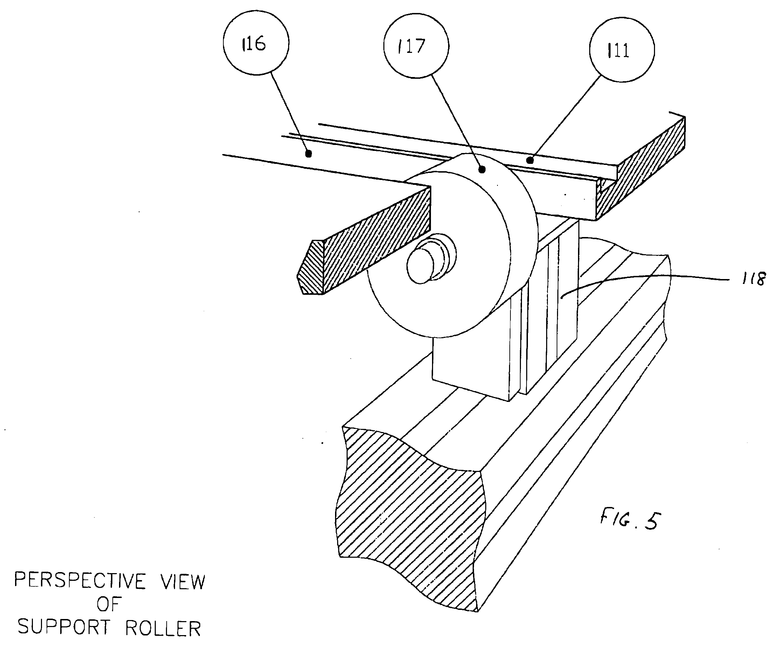

Referring to Figure 4, in which parts common to the embodiment of Figures 1 to 3 are denoted by like reference numerals but increased by 100, an apparatus 101 of a second embodiment is provided with a curved slot 116 arranged outwardly of one of the radially outermost slots 111, the slot 116 being provided with a series of support rollers 117. The rollers 117 support a pallet (not shown) as it is transferred between the first conveyor 103 and second conveyor 104. As shown in greater detail in Figure 5, each of the rollers 117 is mounted to a support 118 provided underneath the slot 116.

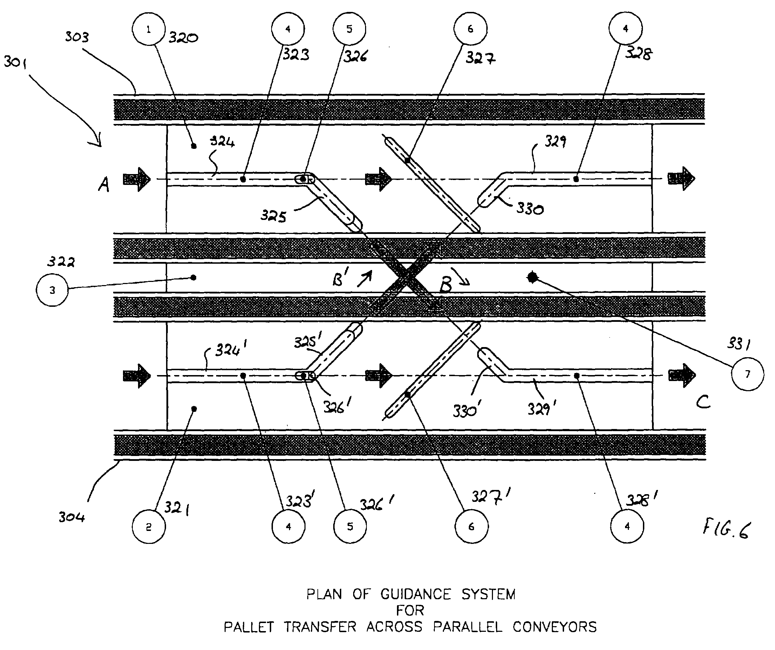

Figure 6, in which parts common to the embodiment of Figures 1 to 3 are denoted by like reference numerals but increased by 200, shows an apparatus 301 for conveying one or more pallets (not shown), and has a first conveyor 303 and a second conveyor 304 arranged generally parallel to each other. Guide plates 320, 321 are arranged between the conveyor belts of the first and second conveyors 303, 304 respectively, and a guide plate 322 is located between the first and second conveyors 303, 304.

The guide plate 320 has a first slot 323 for receiving and guiding a pin 14 of a pallet 2. The first slot has a first portion 324 extending in the direction of arrow A (i.e the direction of travel of a pallet along the first conveyor 303), and a second portion 325 extending from the end of the first portion 324 and at an angle thereto. A two position retractable guide pin ramp block 326 is arranged in the first slot 323 where the first portion 324 and second portion 325 meet.

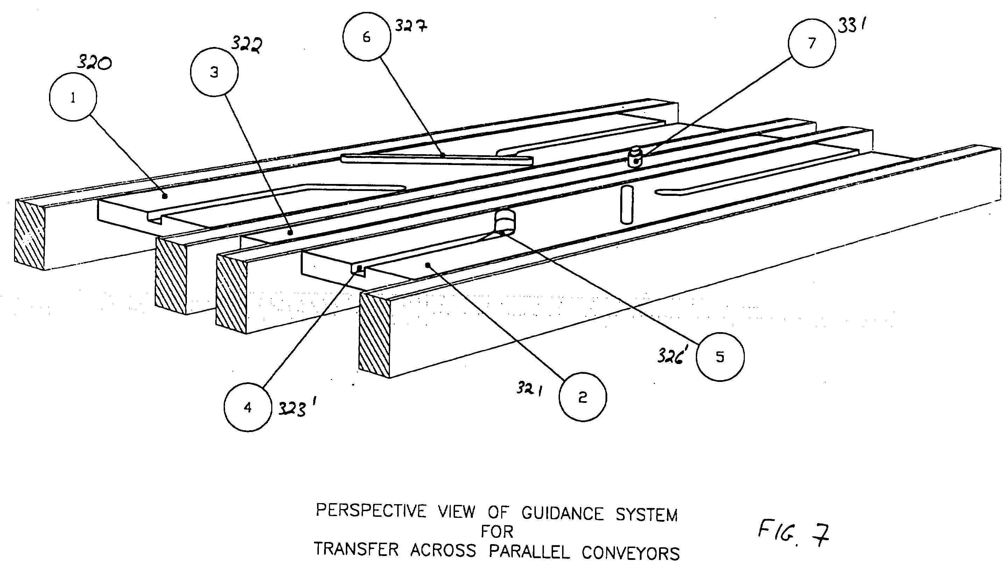

The ramp block 326 (see Figure 7) has an inclined surface at the upper part thereof, and has an upper position in which a pin 14 travelling along the first portion 324 is lifted out of the first slot 324 to enable the pallet to travel along the first conveyor 303 in the direction of arrow A. The ramp block 326 also has a lower position in which a pin 14 travelling along first portion 324 is then guided along second portion 325 in the direction of arrow B towards the second conveyor 304.

A two position retractable guide bar 327 extends generally parallel to the second portion 325 and is arranged to be in an upper position (see Figure 7) when the ramp block 326 is in its lower position. This results in the guide bar 327 being engaged by a side of the pallet (not shown) and assists in transferring the pallet in the direction of arrow B towards the second conveyor 304. Conversely, the guide bar 327 is arranged to be in its lower position when the ramp block 326 is in its upper position, to enable pallets to travel along the first conveyor 303.

The first conveyor 303 also has a second slot 328 comprising a first portion 329 extending in the direction of arrow A, and a second portion 330 extending at an angle thereto. It can be seen from Figure 6 that the second conveyor 304 is provided with a similar slot 323' comprising a first portion 324' and a second portion 325' extending in the direction of arrow B' such that the slot 323' is a mirror image of the slot 323. Movement of a pallet in the direction of arrow B' caused by ramp block 326' (causing a pin 14 to travel along second portion 325') is assisted by a guide bar 327' extending generally parallel to arrow B', and a second slot 328' is a mirror image of second slot 328 and comprises a first portion 329' and a second portion 330'. It will be appreciate by persons skilled in the art that the second conveyor 304 is constructed in an identical manner to the first conveyor 303.

The operation of the apparatus of Figures 6 and 7 will now be described.

In order to transfer a pallet from the first conveyor 303 to the second conveyor 304, the ramp block 326 is placed in its lower position, and the guide bar 327 is placed in its upper position. A pin 14 on the leading edge of a pallet engages the first portion 324 of slot 323, and is directed along a second portion 325 of the slot. At the same time, an edge of the pallet engages guide bar 327 to cause the pallet to move in the direction of arrow B across guide plate 322. As the pallet travels across guide plate 322, its transfer between the first conveyor 303 and second conveyor 304 is assisted by rotatable guide pin 331, until the pin 14 engages second portion 330' of slot 328' the pin 14 is then caused to engage second portion 329' of slot 328', as a result of which the pallet travels along second conveyor 304 in the direction of arrow C. It will be appreciated by persons skilled in the art that a pallet can be transferred from second conveyor 304 to first conveyor 303 in a similar manner.

It will be appreciated by persons skilled in the art that the above embodiment has been described by way of example only and not in any limitative sense, and that various alterations and modifications are possible without departure from the scope of the invention as defined by the appended claims. For example, although the above embodiment relates to a pair of conveyors 3, 4 arranged generally at right angles or parallel to each other, the conveyors may be arranged at any angle relative to each other. Furthermore, the pins 14 may under certain circumstances not need to be provided with springs 15, for example when the weight of a pin 14 is sufficient to provide the necessary downward force to cause the pin to project from the corresponding pallet.

## Claims

1. An apparatus for conveying goods, the apparatus comprising:
at least one receptacle for receiving goods to be conveyed, the or each said receptacle comprising at least one projection;
a plurality of conveyors for conveying one or more said receptacles in a respective substantially straight line, each said conveyor comprising at least two substantially parallel conveyor belts for supporting lateral outer portions of said receptacles and having a surface arranged at least partially between two said conveyor belts, said surface having at least one groove for releasably engaging one or more said projections; and
transfer means acting between at least one adjacent pair of conveyors for transferring one or more said receptacles between said pair of conveyors, wherein said transfer means comprises at least one respective groove cooperating with a said groove of each of said pair of conveyors for releasably engaging one or more said projections.

2. An apparatus according to claim 1, wherein the or each said projection comprises a respective retractable pin.

3. An apparatus according to claim 1, wherein the or each said retractable pin is urged outwardly of the corresponding receptacle by biassing means.

4. An apparatus according to any one of the preceding claims, wherein at least one said projection is provided adjacent the periphery of the corresponding receptacle.

5. An apparatus according to any one of the preceding claims, wherein at least one said receptacle may have a plurality of said projections.

6. An apparatus according to any one of the preceding claims, wherein said transfer means further comprises disengaging means for disengaging one or more said projections from at least one groove thereof.

7. An apparatus according to claim 6, wherein the disengaging means comprises at least one upwardly inclined surface arranged in a respective groove for engaging a said projection to disengage said projection from said groove.

8. An apparatus according to claim 6 or 7, wherein the or each said groove is curved and said disengaging means is provided adjacent an end of the or each said corresponding groove.

9. An apparatus according to claim 6 or 7, wherein at least one said groove comprises a respective first groove portion and a respective second groove portion extending from said first groove portion and angled relative thereto, and wherein said disengaging means is selectively actuable and provided adjacent an end of the or each said first group portion adjacent the corresponding said second groove portion.

10. An apparatus according to claim 9, wherein the guide means comprises a respective surface arranged substantially parallel to at least one said second groove portion.

11. An apparatus according to any one of the preceding claims, wherein the transfer means further comprises at least one roller provided adjacent a said groove.

12. An apparatus according to claim 11, wherein the transfer means comprises a plurality of said grooves, and at least one said roller is provided outwardly of the outermost of said grooves.

13. An apparatus for conveying goods, the apparatus substantially as hereinbefore described with reference to the accompanying drawings.
